(19) Europäisches Patentamt
European Patent Office
Office européen des brevets

(11) **EP 1 806 174 B1**

(12) **EUROPEAN PATENT SPECIFICATION**

(45) Date of publication and mention
of the grant of the patent:
**22.02.2012 Bulletin 2012/08**

(51) Int Cl.:
***B01D 71/56*** (2006.01)   ***B01D 69/10*** (2006.01)
***B01D 69/12*** (2006.01)

(21) Application number: **05781415.4**

(22) Date of filing: **05.09.2005**

(86) International application number:
**PCT/JP2005/016247**

(87) International publication number:
**WO 2006/038409 (13.04.2006 Gazette 2006/15)**

(54) **PROCESS FOR PRODUCING SEMIPERMEABLE COMPOSITE MEMBRANE**

VERFAHREN ZUR HERSTELLUNG EINER SEMIPERMEABLEN VERBUNDMEMBRAN

PROCEDE DE FABRICATION DE MEMBRANE COMPOSITE SEMI-PERMÉABLE

(84) Designated Contracting States:
**ES FR GB IT**

(30) Priority: **01.10.2004 JP 2004290391**

(43) Date of publication of application:
**11.07.2007 Bulletin 2007/28**

(73) Proprietor: **NITTO DENKO CORPORATION**
**Ibaraki-shi, Osaka 567-8680 (JP)**

(72) Inventors:
• **OHARA, Tomomi,**
**c/o NITTO DENKO CORPORATION**
**Ibaraki-shi,**
**Osaka 567-8680 (JP)**
• **HARADA, Chiaki,**
**c/o NITTO DENKO CORPORATION**
**Ibaraki-shi,**
**Osaka 567-8680 (JP)**
• **INOUE, Tetsuo,**
**c/o NITTO DENKO CORPORATION**
**Ibaraki-shi,**
**Osaka 567-8680 (JP)**

• **KURATA, Naoki,**
**c/o NITTO DENKO CORPORATION**
**Ibaraki-shi,**
**Osaka 567-8680 (JP)**
• **KONISHI, Takahisa,**
**c/o NITTO DENKO CORPORATION**
**Ibaraki-shi,**
**Osaka 567-8680 (JP)**
• **KAMADA, Takashi,**
**c/o NITTO DENKO CORPORATION**
**Ibaraki-shi,**
**Osaka 567-8680 (JP)**

(74) Representative: **Setna, Rohan P.**
**Boult Wade Tennant**
**Verulam Gardens**
**70 Gray's Inn Road**
**London WC1X 8BT (GB)**

(56) References cited:
**JP-A- 5 023 558      JP-A- 53 016 373**
**JP-A- 58 180 206      JP-A- 2000 093 771**
**JP-A- 2000 153 137   US-A- 3 744 642**
**US-A- 5 173 335        US-A- 6 015 495**

**Description**

FIELD OF THE INVENTION

The present invention relates to a process for producing a composite semipermeable membrane having a skin layer which includes a polyamide resin and a porous support that supports the skin layer. The composite semipermeable membranes are suitably used for production of ultrapure water, desalination of brackish water or sea water, etc., and usable for removing or collecting pollution sources or effective substances from pollution, which causes environment pollution occurrence, such as dyeing drainage and electrodeposition paint drainage, leading to contribute to closed system for drainage. Furthermore, the membrane can be used for concentration of active ingredients in foodstuffs usage, for an advanced water treatment, such as removal of harmful component in water purification and sewage usage etc.

DESCRIPTION OF THE RELATED ART

Recently, many composite semipermeable membranes, in which a skin layer includes polyamides obtained by interfacial polymerization of polyfunctional aromatic amines and polyfunctional aromatic acid halides and is formed on a porous support, have been proposed (Japanese Patent Application Laid-Open Nos. 55-147106, 62-121603, 63-218208, and 02-187135). A composite semipermeable membrane, in which a skin layer includes a polyamide obtained by interfacial polymerization of a polyfunctional aromatic amine and a polyfunctional alicyclic acid halide and is formed on a porous support, has been also proposed (Japanese Patent Application Laid-Open No. 61-42308).

However, when it is needed to obtain a target compound condensed or refined as permeated liquid or non-permeated liquid using conventional semipermeable membranes in actual cases, there has occurred problems that unreacted components eluted or flowing out from parts constituting the membrane or the membrane module may reduce purity of the targeted compound. In order to solve with this problem, sufficient washing is given to these semipermeable membranes and membrane modules in advance of use, but this washing operation generally may take long time or need high energy and, may reduce membrane performances, such as flux of the membrane.

There have been proposed a process of processing the membrane with a solution of sodium hydrogensulfite of 0.01 to 5% by weight, at a temperature from approximately 20 to 100°C, for approximately 1 to 60 minutes in order to remove unreacted components from the semipermeable membrane (Patent No. 2947291 specification), a process of removing unreacted residual materials by contact of an organic material aqueous solution to a composite semipermeable membrane (Japanese Patent Application Laid-Open No. 200-24470), and a process of extracting excessive components remaining in the base material by successive bath of citric acid, bleaching agents, and the like (Published Japanese translation of a PCT application No.2002-516743).

On the other hand, a membrane separation process, in which filtration of a water to be treated is accompanied by concurrent ultrasonic cleaning of the membrane element in order to separate and remove solid matters that are attached to the film surface of the membrane element and cannot be easily released and pollution in fine pores, and to prevent solid matters from attaching on the film surface Japanese Patent Application Laid-Open No. 11-319517).

A process of manufacturing a fluid separation membrane, in which unreacted aromatic monomers can be removed by washing with a cleaning liquid at a temperature of 50°C or more, has been proposed (Patent No. 3525759 specification).

However, unreacted components cannot fully be removed by the above-mentioned processes, and target permeated liquid with high purity cannot be obtained. In addition, since the prolonged processing is necessary in order to fully remove the unreacted components, the performance of the membrane decrease. Furthermore, the process described in Japanese Patent Application Laid-Open No. 11-319517 is a method of removing pollution attached to the film surface of the membrane element during membrane-separation operation, and is not a method of removing unreacted residual materials in the membrane element. US 6,015,495 relates generally to reverse osmosis membranes and more particularly to a composite polyamide reverse osmosis membrane and to a method of making the same.

SUMMARY OF THE INVENTION

In the first aspect of the present invention there is provided a process for producing a composite semipermeable membrane having a skin layer, formed on a surface of a porous support, including a polyamide resin obtained by an interfacial polymerization of a polyfunctional amine component and a polyfunctional acid halide component, the process comprising the steps of: forming a covering layer of an aqueous solution comprising an amine aqueous solution including a polyfunctional amine component and a polyhydric alcohol on a porous support; and forming a skin layer including a polyamide resin by contacting the covering layer of the aqueous solution and an organic solution containing a polyfunctional acid halide component to cause interfacial polymerization of the polyfunctional amine component and the polyfunctional acid halide component, wherein a membrane washing treatment step for removing an unreacted polyfunctional amine component after skin layer formation is omitted.

The present invention aims at providing a process for producing a composite semipermeable membrane excellent in water permeability and salt-blocking rate, a smaller content of unreacted polyfunctional amine components in the membrane, the composite semipermeable membrane avoiding the necessity of a membrane washing treatment, and the present invention also aims at providing a process for producing the composite semipermeable membrane.

The present invention relates to a process for producing a composite semipermeable membrane having a skin layer, formed on a surface of a porous support, including a polyamide resin obtained by an interfacial polymerization of a polyfunctional amine component and a polyfunctional acid halide component, the process, including a step of: performing an amine impermeable treatment to the porous support before formation, on the porous support, of a covering layer of an aqueous solution comprising an amine aqueous solution including a polyfunctional amine component, wherein a membrane washing treatment step for removing an unreacted polyfunctional amine component after skin layer formation is omitted.

According to the process for producing the composite semipermeable membrane, the amine impermeable treatment given beforehand to the porous support can effectively prevent permeation of the polyfunctional amine component within the porous support. Thereby, the process can reduce the content of the unreacted polyfunctional amine component in the porous support after the skin layer formation, and can allow omission of the subsequent membrane washing treatment step, leading to improvement in productive efficiency owing to omission of the membrane washing treatment, without deterioration of membrane performance.

In the present invention, the content of the unreacted polyfunctional amine component in the composite semipermeable membrane is preferably 200 $mg/m^2$ or less, more preferably 150 $mg/m^2$ or less, and especially preferably 100 $mg/m^2$ or less. The content of the unreacted polyfunctional amine component of 200 $mg/m^2$ or less in the composite semipermeable membrane can effectively suppress deterioration of purity of a permeated liquid, or a condensed targeted compound, even when the membrane washing treatment step is omitted.

The amine impermeable treatment can preferably reduce the water content in the porous support to 20 $g/m^2$ or less. The water content in the porous support is more preferably 10 $g/m^2$ or less, and is especially preferably 1 $g/m^2$ or less. Since the polyfunctional amine component is dissolved in water and is applied to the porous support, reduction of the water content in the porous support to 20 $g/m^2$ or less can effectively control permeation and diffusion of the polyfunctional amine component into the porous support.

In addition, the viscosity of the amine aqueous solution is preferably 7 mPa·s or more, and more preferably 10 mPa·s or more.

In addition, in the amine aqueous solution, the moving velocity of the polyfunctional amine component in the porous support by contact at atmospheric pressure to the porous support preferably is 0.3 $mg/m^2$·sec or less, and more preferably 0.1 $mg/m^2$·sec or less.

As mentioned above, adjustment of the viscosity of the amine aqueous solution or the moving velocity in the porous support can effectively control permeation of the polyfunctional amine component into the porous support.

The process of producing the composite semipermeable membrane of the present invention preferably includes a process for applying an amine aqueous solution so that the amount of the polyfunctional amine component supplied on the porous support may be 200 to 600 $mg/m^2$. The amount of the polyfunctional amine component may be more preferably 400 to 600 $mg/m^2$. The amount of the polyfunctional amine component less than 200 $mg/m^2$ may easily cause defect such as pinholes in the skin layer, and tends to give difficulty in formation of a uniform high-performance skin layer. On the other hand, the amount exceeding 600 $mg/m^2$ gives of an excessive amount of the polyfunctional amine component on the porous support, and tends to allow easy permeation of the polyfunctional amine component into the porous support, or to deteriorate the water permeability and salt-blocking property of the obtained membrane.

Since the composite semipermeable membrane includes only a small amount of the unreacted polyfunctional amine components in the membrane, and the membrane washing treatment is not applied, the composite semipermeable membrane of the present invention does not show deterioration of membrane performance, and has outstanding water permeability and salt-blocking rate.

BEST MODE FOR CARRYING OUT THE INVENTION

Embodiments of the present invention will be described hereinafter. In the composite semipermeable membrane a skin layer including a polyamide resin by interfacial polymerization of a polyfunctional amine component and a polyfunctional acid halide component is formed on the surface of a porous support, wherein the content of an unreacted polyfunctional amine component is 200 $mg/m^2$ or less without carrying out washing removal of the unreacted polyfunctional amine component after formation of the skin layer. The composite semipermeable membrane may be produced, for example, by giving an amine impermeable treatment to the porous support before forming the covering layer of an aqueous solution comprising an amine aqueous solution including the polyfunctional amine component on the porous support, and subsequently by forming the skin layer on the porous support.

The polyfunctional amine component is defined as a polyfunctional amine having two or more reactive amino groups, and includes aromatic, aliphatic, and alicyclic polyfunctional amines.

The aromatic polyfunctional amines include, for example, m-phenylenediamine, p-phenylenediamine, o-phenylenediamine, 1,3,5-triamino benzene, 1,2,4-triamino benzene, 3,5-diaminobenzoic acid, 2,4-diaminotoluene, 2,6-diaminotoluene, N,N'-dimethyl-m-phenylenediamine, 2,4-diaminoanisole, amidol, xylylene diamine etc.

The aliphatic polyfunctional amines include, for example, ethylenediamine, propylenediamine, tris(2-aminoethyl)amine, n-phenylethylenediamine, etc.

The alicyclic polyfunctional amines include, for example, 1,3-diaminocyclohexane, 1,2-diaminocyclohexane, 1,4-diaminocyclohexane, piperazine, 2,5-dimethylpiperazine, 4-aminomethyl piperazine, etc.

These polyfunctional amines may be used independently, and two or more kinds may be used in combination. In order to obtain a skin layer having a higher salt-blocking property, it is preferred to use the aromatic polyfunctional amines.

The polyfunctional acid halide component represents polyfunctional acid halides having two or more reactive carbonyl groups.

The polyfunctional acid halides include aromatic, aliphatic, and alicyclic polyfunctional acid halides.

The aromatic polyfunctional acid halides include, for example trimesic acid trichloride, terephthalic acid dichloride, isophthalic acid dichloride, biphenyl dicarboxylic acid dichloride, naphthalene dicarboxylic acid dichloride, benzenetrisulfonic acid trichloride, benzenedisulfonic acid dichloride, chlorosulfonyl benzenedicarboxylic acid dichloride etc.

The aliphatic polyfunctional acid halides include, for example, propanedicarboxylic acid dichloride, butane dicarboxylic acid dichloride, pentanedicarboxylic acid dichloride, propane tricarboxylic acid trichloride, butane tricarboxylic acid trichloride, pentane tricarboxylic acid trichloride, glutaryl halide, adipoyl halide etc.

The alicyclic polyfunctional acid halides include, for example, cyclopropane tricarboxylic acid trichloride, cyclobutanetetracarboxylic acid tetrachloride, cyclopentane tricarboxylic acid trichloride, cyclopentanetetracarboxylic acid tetrachloride, cyclohexanetricarboxylic acid trichloride, tetrahydrofurantetracarboxylic acid tetrachloride, cyclopentanedicarboxylic acid dichloride, cyclobutanedicarboxylic acid dichloride, cyclohexanedicarboxylic acid dichloride, tetrahydrofuran dicarboxylic acid dichloride, etc.

These polyfunctional acid halides may be used independently, and two or more kinds may be used in combination. In order to obtain a skin layer having higher salt-blocking property, it is preferred to use aromatic polyfunctional acid halides. In addition, it is preferred to form a cross linked structure using polyfunctional acid halides having trivalency or more as at least a part of the polyfunctional acid halide components.

Furthermore, in order to improve performance of the skin layer including the polyamide resin, polymers such as polyvinyl alcohol, polyvinylpyrrolidone, and polyacrylic acids etc., and polyhydric alcohols, such as sorbitol and glycerin may be copolymerized.

The porous support for supporting the skin layer is not especially limited as long as it has a function for supporting the skin layer, and usually ultrafiltration membrane having micro pores with an average pore size approximately 10 to 500 angstroms may preferably be used. Materials for formation of the porous support include various materials, for example, polyarylether sulfones, such as polysulfones and polyether sulfones; polyimides; polyvinylidene fluorides; etc., and polysulfones and polyarylether sulfones are especially preferably used from a viewpoint of chemical, mechanical, and thermal stability. The thickness of this porous support is usually approximately 25 to 125 μm, and preferably approximately 40 to 75 μm, but the thickness is not necessarily limited to them. The porous support may be reinforced with backing by cloths, nonwoven fabric, etc.

Processes for forming the skin layer including the polyamide resin on the surface of the porous support is not in particular limited, and any publicly known methods may be used. For example, the publicly known methods include an interfacial condensation method, a phase separation method, a thin film application method, etc. The interfacial condensation method is a method, wherein an amine aqueous solution containing a polyfunctional amine component, an organic solution containing a polyfunctional acid halide component are forced to contact together to form a skin layer by an interfacial polymerization, and then the obtained skin layer is laid on a porous support, and a method wherein a skin layer of a polyamide resin is directly formed on a porous support by the above-described interfacial polymerization on a porous support. Details, such as conditions of the interfacial condensation method, are described in Japanese Patent Application Laid-Open No. 58-24303, Japanese Patent Application Laid-Open No. 01-180208, and these known methods are suitably employable.

In the present invention, it is especially preferred that an amine impermeable treatment is applied to a porous support, before application of an amine aqueous solution, subsequently, a covering layer of aqueous solution made from the amine aqueous solution containing a polyfunctional amine components is formed on the porous support, then an interfacial polymerization is performed by contact with an organic solution containing a polyfunctional acid halide component, and the covering layer of aqueous solution, and then a skin layer is formed.

The amine impermeable treatment includes, for example:

1) a treatment for reducing, by drying, the water content in the porous support to be 20 g/m$^2$ or less;

2) a treatment for covering the surface of the porous support, and for impregnation into the porous support, using solvents of hydrocarbon solvents and naphthenic solvents etc. that do not substantially dissolve the polyfunctional amine component, and do not substantially mix with the amine aqueous solution;

3) a treatment for covering the surface of the porous support, and for impregnation into the porous support, using a solution of inorganic acids and organic acids (preferably pH 4 or less); and

4) a treatment for covering the surface of the porous support, and for impregnation into the porous support, using an aqueous solution having a viscosity of 10 mPa·s or more containing glycerin, ethylene glycol, polyethylene glycol, or polyvinyl alcohol. Of these treatments, a treatment for reducing the water content in the porous support to be 20 g/m$^2$ or less is especially preferable.

Furthermore, the permeation and diffusion of the polyfunctional amine component into the porous support can further be suppressed by adjustment of the viscosity of the amine aqueous solution to be 7 mPas or more, and by adjustment of the amine aqueous solution so that the moving velocity of the polyfunctional amine component in the porous support when forced to contact to the used porous support at atmospheric pressures may be 0.3 mg/m$^2$·sec or less. The method of adjusting the viscosity of the amine aqueous solution to be 7 mPa·s or more include, for example, a method of adding polyhydric alcohols, such as glycerin, ethylene glycol, and propylene glycol, to the aqueous solution. The method of adjusting the amine aqueous solution so that the moving velocity of the polyfunctional amine component in the porous support may be 0.3 mg/m$^2$·sec or less includes, but not limited to, a method of reducing the surface tension of the amine aqueous solution, for example, a method of avoiding of addition of components, such as surfactants, a method of adjusting the pH to a neutral range according to composition of the amine aqueous solution.

In the interfacial-polymerization method, although the concentration of the polyfunctional amine component in the amine aqueous solution is not in particular limited, the concentration is preferably 0.1 to 5% by weight, and more preferably 0.5 to 2% by weight. Less than 0.1% by weight of the concentration of the polyfunctional amine component may easily cause defect such as pinhole in the skin layer, leading to tendency of deterioration of salt-blocking property. On the other hand, the concentration of the polyfunctional amine component exceeding 5% by weight allows easy permeation of the polyfunctional amine component into the porous support to be an excessively large thickness and to raise the permeation resistance, likely giving deterioration of the permeation flux.

Although the concentration of the polyfunctional acid halide component in the organic solution is not in particular limited, it is preferably 0.01 to 5% by weight, and more preferably 0.05 to 3% by weight. Less than 0.01% by weight of the concentration of the polyfunctional acid halide component is apt to make the unreacted polyfunctional amine component remain, to cause defect such as pinhole in the skin layer, leading to tendency of deterioration of salt-blocking property. On the other hand, the concentration exceeding 5% by weight of the polyfunctional acid halide component is apt to make the unreacted polyfunctional acid halide component remain, to be an excessively large thickness and to raise the permeation resistance, likely giving deterioration of the permeation flux.

The organic solvents used for the organic solution is not especially limited as long as they have small solubility to water, and do not cause degradation of the porous support, and dissolve the polyfunctional acid halide component. For example, the organic solvents include saturated hydrocarbons, suchascyclohexane,heptane, octane, and nonane, halogenated hydrocarbons, such as 1,1,2-trichlorofluoroethane, etc.

They are preferably saturated hydrocarbons having a boiling point of 300°C or less, and more preferably 200°C or less.

Various kinds of additives may be added to the amine aqueous solution or the organic solution in order to provide easy filmproduction and to improve performance of the composite semipermeable membrane to be obtained. The additives include, for example, surfactants, such as sodium dodecylbenzenesulfonate, sodium dodecyl sulfate, and sodium lauryl sulfate; basic compounds, such as sodium hydroxide, trisodium phosphate, triethylamine, etc. for removing hydrogen halides formed by polymerization; acylation catalysts; compounds having a solubility parameter of 8 to 14 (cal/cm$^3$) $^{1/2}$ described in Japanese Patent Application Laid-Open No. 08-224452.

The period of time after application of the amine aqueous solution until application of the organic solution on the porous support depends on the composition and viscosity of the amine aqueous solution, and on the pore size of the surface layer of the porous support, and it is preferably 15 seconds or less, and more preferably 5 seconds or less. Application interval of the solution exceeding 15 seconds may allow permeation and diffusion of the amine aqueous solution to a deeper portion in the porous support, and possibly cause a large amount of the residual unreacted polyfunctional amine components in the porous support. Excessive amine aqueous solution may be removed after covering by the amine aqueous solution on the porous support.

In the present invention, after the contact with the covering layer of aqueous solution and the organic solution including the amine aqueous solution, it is preferred to remove the excessive organic solution on the porous support, and to dry the formed membrane on the porous support by heating at a temperature of 70°C or more, forming the skin layer. Heat-treatment of the formed membrane can improve the mechanical strength, heat-resisting property, etc. The heating temperature is more preferably 70 to 200°C, and especially preferably 100 to 150°C. The heating period of time is preferably approximately 30 seconds to 10 minutes, and more preferably approximately 40 seconds to 7 minutes.

The thickness of the skin layer formed on the porous support is not in particular limited, and it is usually approximately 0.05 to 2 $\mu$m, and preferably 0.1 to 1 $\mu$m.

In the composite semipermeable membrane thus produced, the content of the unreacted polyfunctional amine component is adjusted to 200 mg/m$^2$ or less without carrying out washing removal of the unreacted polyfunctional amine component after formation of the skin layer, eliminating the necessity for separate membrane washing treatment.

The shape of the composite semipermeable membrane is not limited at all. That is, the composite semipermeable membrane can have all possible membrane shapes, such as of a flat film, or a spiral element. Various conventionally known treatments maybe given to the composite semipermeable membrane in order to improve the salt-blocking property, water permeability, resistance to oxidation agents, and the like of the composite semipermeable membrane

The composite semipermeable membrane produced by such a production process has only a low content of the unreacted polyfunctional amine components, and the permeated liquid that has been separated and refined or the target compound that has been condensed, using the composite semipermeable membrane, will have a high purity including very few impurities.

EXAMPLES

The present invention will, hereinafter, be described with reference to Examples, but the present invention is not limited at all by these Examples.

[Evaluation and measuring method]

(Measurement of permeation flux and salt-blocking rate)

A composite semipermeable membrane produced with a shape of a flat film is cut into a predetermined shape and size, and is set to a cell for flat film evaluation. An aqueous solution containing NaCl of about 1500 mg/L and adjusted to a pH of 6.5 to 7.5 with NaOH was forced to contact to a supply side, and a permeation side of the membrane at a differential pressure of 1.5 Mpa at 25°C. A permeation velocity and an electric conductivity of the permeated water obtained by this operation were measured for, and a permeation flux (m$^3$/m$^2$·d) and a salt-blocking rate (%) were calculated. The correlation (calibration curve) of the NaCl concentration and the electric conductivity of the aqueous solution was beforehand made, and the salt-blocking rate was calculated by a following equation.

```
Salt-blocking rate (%) = {1 - (NaCl concentration [mg/L] in permeated

liquid) / (NaCl concentration [mg/L] in supply solution)} × 100
```

(Measurement of moving velocity of a polyfunctional amine component in a porous support)

An amine aqueous solution was forced to contact on one side of a porous support to be used at an ordinary pressure, and pure water was forced to contact to another side at the ordinary pressure. In definite period of time after contacting to pure water side by this operation, the amine begins to be detected, and then the concentration increases with progress of period of time. Where the gradient of concentration to period was stabilized, the gradient was defined as a moving velocity (mg/m$^2$·sec) of the amine component. Measurement of concentration of the amine component by the side of pure water was performed using a spectrophotometer for ultraviolet and visible region "UV-2450" (made by Shimadzu Corp.).

(Measurement of viscosity of amine aqueous solution)

Viscosity of an amine aqueous solution was measured for using BL type viscometer (made by Tokyo Keiki Co., Ltd.).

(Water content measurement in porous support)

A support sample with a predetermined area was dried with a predetermined temperature, and a water content of a porous support was calculated from a weight change before and after drying

(Measurement of content of unreacted polyfunctional amine component)

A composite semipermeable membrane (25 mmφ) produced in Examples and Comparative Examples was immersed into an aqueous solution (25°C) containing 50% by weight of ethanol and kept standing for about 8 hours to extract an unreacted polyfunctional amine component in the composite semipermeable membrane. A UV absorbance in 210 nm of the obtained extract was measured for. On the other hand, beforehand made was a correlation (calibration curve) between the concentration of the polyfunctional amine component in the 50% by weight ethanol aqueous solution and the absorbance at 210 nm of the aqueous solution. The amount of the unreacted polyfunctional amine component included in the composite semipermeable membrane was obtained using the calibration curve.

Production example 1

(Production of porous support)

A dope for manufacturing a membrane containing 18% by weight of a polysulfone (produced by Solvay, P-3500) dissolved in N,N-dimethylformamide (DMF) was uniformly applied so that it might give 200 μm in thickness in wet condition on a nonwoven fabric base material. Subsequently, it was immediately solidified by immersion in water at 40 to 50°C, and DMF as a solvent was completely- extracted by washing. Thus a porous support having a polysulfone microporous layer was produced on the nonwoven fabric base material.

Example 1

The produced porous support was dried by heating at 40°C. The water content in the porous support after drying by heating was 1 g/m$^2$.
An aqueous solution of amines containing 1% by weight of m-phenylenediamine, 3% by weight of triethylamine, and 6% by weight of camphorsulfonic acid (moving velocity of amine component: 0.02 mg/m$^2$·sec) was applied to the porous support, and an excessive amount of the amine aqueous solution was removed by wiping to form a covering layer of aqueous solution. Subsequently, an iso octane solution containing 0.2% by weight of trimesic acid chloride was applied to the surface of the covering layer of aqueous solution. Subsequently, the excessive solution was removed, the material was kept standing for 3 minutes in a hot air dryer at 120 °C to form a skin layer containing a polyamide resin on the porous support, and thus a composite semipermeable membrane was obtained. Permeation examination was performed using the produced composite semipermeable membrane. The results of permeation examination are shown in Table 1.

Examples 2 to 15

Composite semipermeable membranes were produced and permeation examination was performed in the same manner as in Example 1, except for changing the drying temperature of the porous support, and the composition of the amine aqueous solution as shown in Table 1. The results of permeation examination are shown in Table 1 shows results.

Comparative example 1 and 2

A composite semipermeable membrane was produced in the same manner as in Example 1, and permeation examination was performed, except for not performing a drying treatment to the porous support, and changing the composition of the amine aqueous solution. Table 1 shows results of permeation examination. Since this Comparative example 1 and 2 have a large amount of content of the unreacted polyfunctional amine component, it did not exhibit satisfactory practical use.

Example 16

The produced porous support was air-dried at a room temperature. The water content in the porous support after drying was 1 g/m$^2$.
An aqueous solution of amines containing 1.5% by weight of m-phenylenediamine, 3% by weight of triethylamine, and 6% by weight of camphorsulfonic acid (moving velocity of amine component: 0.02 mg/m$^2$·sec) was applied on the porous support, and an excessive amount of the amine aqueous solution was removed by wiping to form a covering layer of aqueous solution. Subsequently, an iso octane solution containing 0.25% by weight of trimesic acid chloride was applied to the surface of the covering layer of aqueous solution. Subsequently, the excessive solution was removed, the material was kept standing for 3 minutes in a hot air dryer at 120 degree C to form a skin layer containing a polyamide resin on the porous support, and thus a composite semipermeable membrane was obtained. Permeation examination was performed using the produced composite semipermeable membrane. The results of permeation examination are shown in Table 1.

Example 17

A composite semipermeable membrane was produced in the same manner as in Example 16, and permeation examination was performed, except for using an amine aqueous solution (moving velocity of amine component: 0.03 mg/m$^2$·sec) containing 1.5% by weight of m-phenylenediamine, 4% by weight of triethylamines, and 8% by weight of camphorsulfonic acid. The results of permeation examination are shown in Table 1.

Comparative example 3

A composite semipermeable membrane was produced in the same manner as in Example 16, and permeation examination was performed, except for setting the water content of the porous support as 30 g/m$^2$, and for using an amine aqueous solution (moving velocity of amine component: 2.7 mg/m$^2$·sec) containing 3% by weight of m-phenylenediamine, 3% by weight of triethylamine, 6% by weight of camphorsulfonic acid, and 0.15% by weight of sodium lauryl sulfate. The results of permeation examination are shown in Table 1. The Comparative example 3 does not exhibit satisfactory practical use since it has a very large amount of content of the unreacted polyfunctional amine component.

Example 18

The produced porous support was air-dried at 60 °C. The water content in the porous support after drying was 1 g/m$^2$.
An amount of 60 g/m$^2$ (m-phenylenediamine: 600 mg/m$^2$) of an amine aqueous solution containing 1% by weight of m-phenylenediamine, 3% by weight of triethylamines, and 6% by weight of camphor sulfone on the porous support was applied, and an excessive amount of the amine aqueous solution was removed by wiping to form a covering layer of aqueous solution. Subsequently, an iso octane solution containing 0.25% by weight of trimesic acid chloride was applied to the surface of the covering layer of aqueous solution. Subsequently, the excessive solution was removed, the material was kept standing for 3 minutes in a hot air dryer at 120 °C to form a skin layer containing a polyamide resin on the porous support, and thus a composite semipermeable membrane was obtained. Permeation examination was performed using the produced composite semipermeable membrane. The results of permeation examination are shown in Table 2.

Examples 19 to 22 and Comparative examples 4 to 6

As shown in Table 2, a composite semipermeable membrane was produced in the same manner as in Example 18, and permeation examination was performed, except for changing the water content of the porous support, and the composition of the amine aqueous solution. Theresults of permeation examination are shown in Table 2.

Example 23

The produced porous support was air-dried at a room temperature. The water content in the porous support after drying was 1g/m$^2$.
An amine aqueous solution (viscosity: 7 mPa·s) containing 1.5% by weight of m-phenylenediamine, 3% by weight of triethylamines, 6% by weight of camphorsulfonic acid, and 50% by weight of ethylene glycol was applied on the porous support. The excessive amine aqueous solution was removed after that to form a covering layer of aqueous solution. Subsequently, an iso octane solution containing 0.2% by weight of trimesic acid chloride was applied to the surface of the covering layer of aqueous solution. Subsequently, the excessive solution was removed, the material was kept standing for 3 minutes in 120 °C hot air drying equipment to form a skin layer containing a polyamide resin on the porous support, and thus a composite semipermeable membrane was obtained. Permeation examination was performed using the produced composite semipermeable membrane. The results of permeation examination are shown in Table 3.

Examples 24 and 25

A composite semipermeable membrane was produced in the same manner as in Example 23, and permeation examination was performed, except for changing the amount of addition of ethylene glycol as shown in Table 3. The results of permeation examination are shown in Table 3.

[Table 1]

| | Porous support | | Amine aqueous solution | | | | Moving velocity (mg/m². second) |
|---|---|---|---|---|---|---|---|
| | Drying temperature (°C) | Water content (g/m²) | m-phenylenediamine (% by weight) | Triethylamine (% by weight) | Camphorsulfonic acid (% by weight) | Sodium lauryl sulfate (% by weight) | |
| Example 1 | 40 | 1 | 1 | 3 | 6 | – | 0.02 |
| Example 2 | 40 | 1 | 1.25 | 3 | 6 | – | 0.02 |
| Example 3 | 40 | 1 | 1.5 | 3 | 6 | – | 0.02 |
| Example 4 | 50 | 1 | 1 | 3 | 6 | – | 0.02 |
| Example 5 | 50 | 1 | 1.25 | 3 | 6 | – | 0.02 |
| Example 6 | 50 | 1 | 1.5 | 3 | 6 | – | 0.02 |
| Example 7 | 60 | 1 | 1.5 | 3 | 6 | – | 0.02 |
| Example 8 | 80 | 1 | 1.5 | 3 | 6 | – | 0.02 |
| Example 9 | Room temperature | 1 | 1 | 3 | 6 | – | 0.03 |
| Example 10 | Room temperature | 1 | 1.25 | 3 | 6 | – | 0.03 |
| Example 11 | Room temperature | 1 | 1.5 | 3 | 6 | – | 0.03 |
| Example 12 | Room temperature | 10 | 1 | 3 | 6 | – | 0.11 |
| Example 13 | Room temperature | 10 | 1.25 | 3 | 6 | – | 0.15 |
| Example 14 | Room temperature | 20 | 1 | 3 | 6 | – | 0.23 |
| Example 15 | Room temperature | 20 | 1.25 | 3 | 6 | – | 0.24 |
| Comparative Example 1 | – | 60 | 1.25 | 3 | 6 | – | 1.8 |
| Comparative Example 2 | – | 60 | 1.5 | 3 | 6 | – | 2.0 |
| Example 16 | Room temperature | 1 | 1.5 | 3 | 6 | – | 0.02 |
| Example 17 | Room temperature | 1 | 1.5 | 4 | 8 | – | 0.03 |
| Comparative Example 3 | Room temperature | 30 | 3 | 3 | 6 | 0.15 | 2.7 |

| | Permeation examination | | Amount of unreacted polyfunctional amine (mg/m²) |
| | Salt-blocking rate (%) | Permeation flux (m³/m²·d) | |
|---|---|---|---|
| Example 1 | 98.0 | 1.2 | 67 |
| Example 2 | 99.1 | 1.5 | 119 |
| Example 3 | 99.4 | 1.6 | 164 |
| Example 4 | 95.2 | 1.0 | 75 |
| Example 5 | 99.0 | 1.4 | 117 |
| Example 6 | 99.4 | 1.4 | 172 |
| Example 7 | 98.9 | 1.0 | 145 |
| Example 8 | 99.0 | 1.1 | 78 |
| Example 9 | 97.6 | 0.7 | 49 |
| Example 10 | 98.5 | 1.2 | 112 |
| Example 11 | 97.5 | 1.1 | 137 |
| Example 12 | 97.7 | 0.8 | 182 |
| Example 13 | 98.3 | 1.1 | 181 |
| Example 14 | 98.2 | 0.9 | 181 |
| Example 15 | 98.1 | 1.1 | 185 |
| Comparative Example 1 | 98.7 | 0.7 | 208 |
| Comparative Example 2 | 97.4 | 0.7 | 227 |
| Example 16 | 98.4 | 1.3 | 61 |
| Example 17 | 98.7 | 1.0 | 117 |
| Comparative Example 3 | 97.6 | 0.7 | 336 |

[Table 2]

| | Porous support | | Amine aqueous solution | | |
|---|---|---|---|---|---|
| | Drying temperature (°C) | Water content (g/m²) | m-phenylenediamine (% by weight) | Triethylamine (% by weight) | Camphorsulfonic acid (% by weight) |
| Example 18 | 60 | 1 | 1 | 3 | 6 |
| Example 19 | 60 | 1 | 1 | 3 | 6 |
| Example 20 | 60 | 1 | 1.5 | 2 | 4 |
| Example 21 | 60 | 1 | 1.5 | 3 | 6 |
| Example 22 | 60 | 1 | 1.5 | 4 | 8 |
| Comparative Example 4 | 60 | 30 | 4 | 3 | 6 |
| Comparative Example 5 | 60 | 30 | 4 | 3 | 6 |
| Comparative Example 6 | 60 | 30 | 4 | 3 | 6 |

| | Amount of supply | | Permeation examination | | Amount of unreacted polyfunctional amine (mg/m²) |
|---|---|---|---|---|---|
| | Amine aqueous solution (g/m²) | Polyfunctional amine component (mg/m²) | Salt-blocking rate (%) | Permeation flux (m³/m²·d) | |
| Example 18 | 60 | 600 | 98.5 | 1.3 | 23 |
| Example 19 | 40 | 400 | 98.2 | 1.1 | 19 |
| Example 20 | 40 | 600 | 95.8 | 0.7 | 3 |
| Example 21 | 40 | 600 | 98.4 | 1.3 | 38 |
| Example 22 | 40 | 600 | 98.7 | 1.0 | 110 |
| Comparative Example 4 | 20 | 800 | 96.1 | 0.8 | 278 |
| Comparative Example 5 | 30 | 1200 | 95.1 | 0.8 | 325 |
| Comparative Example 6 | 40 | 1600 | 95.7 | 0.7 | 315 |

EP 1 806 174 B1

[Table 3]

| | Porous support | | Amine aqueous solution | | | | Viscosity (mPa·s) |
|---|---|---|---|---|---|---|---|
| | Drying temperature (°C) | Water content (g/m²) | m-phenylenediamine (% by weight) | Triethylamine (% by weight) | Camphorsulfonic acid (% by weight) | Ethylene glycol (% by weight) | |
| Example 23 | Room temperature | 1 | 1.5 | 3 | 6 | 50 | 7 |
| Example 24 | Room temperature | 1 | 1.5 | 3 | 6 | 70 | 10 |
| Example 25 | Room temperature | 1 | 1.5 | 3 | 6 | 80 | 15 |

| | Permeation examination | | Amount of unreacted polyfunctional amine component (mg/m²) |
|---|---|---|---|
| | Salt-blocking rate (%) | Permeation flux (m³/m²·d) | |
| Example 23 | 98.7 | 0.5 | 125 |
| Example 24 | 97.9 | 1.3 | 121 |
| Example 25 | 96.0 | 1.6 | 142 |

As is clearly shown in Tables 1 to 3, beforehand application of the amine impermeable treatment to the porous support can effectively prevent permeation of the polyfunctional amine component to into the porous support. Thereby, the amine impermeable treatment can reduce the content of the unreacted polyfunctional amine component in the porous support after the skin layer formation, and can omit the subsequent membrane washing treatment step. And the omission of the membrane washing treatment can improve productive efficiency without deteriorating the membrane performance.

**Claims**

1. A process for producing a composite semipermeable membrane having a skin layer, formed on a surface of a porous support, including a polyamide resin obtained by an interfacial polymerization of a polyfunctional amine component and a polyfunctional acid halide component, the process comprising the steps of: forming a covering layer of an aqueous solution comprising an amine aqueous solution including a polyfunctional amine component and a polyhydric alcohol on a porous support; and forming a skin layer including a polyamide resin by contacting the covering layer of the aqueous solution and an organic solution containing a polyfunctional acid halide component to cause interfacial polymerization of the polyfunctional amine component and the polyfunctional acid halide component, wherein a membrane washing treatment step for removing an unreacted polyfunctional amine component after skin layer formation is omitted.

2. The process for producing the composite semipermeable membrane according to claim 1, wherein the content of the unreacted polyfunctional amine component in the composite semipermeable membrane is 200 mg/m$^2$ or less.

3. The process for producing the composite semipermeable membrane according to claim 1, wherein the viscosity of the amine aqueous solution is 7 mPas or more.

4. The process for producing the composite semipermeable membrane according to claim 1, wherein the amine solution has a moving velocity of 0.3 mg/m$^2$ sec. or less in the porous support of the polyfunctional amine component in contact to the porous support at an ordinary pressure.

5. The process for producing the composite semipermeable membrane according to claim 1, comprising the step of applying an amine aqueous solution so that the amount of the polyfunctional amine component supplied on the porous support is 200 to 600 mg/m$^2$.

**Patentansprüche**

1. Verfahren zum Herstellen einer semipermeablen Verbundmembran mit einer Hautschicht, die auf einer Oberfläche eines porösen Trägers gebildet wird, umfassend ein Polyamidharz, das durch eine Grenzflächenpolymerisation einer polyfunktionalen Aminkomponente und einer polyfunktionalen Säurehalogenidkomponente erhalten wird, wobei das Verfahren die Schritte umfasst: Bilden einer Deckschicht aus einer wässrigen Lösung, die eine wässrige Aminlösung umfasst, die eine polyfunktionale Aminkomponente und einen mehrwertigen Alkohol enthält, auf einem porösen Träger; und Bilden einer Hautschicht, die ein Polyamidharz enthält, durch Inkontaktbringen der Deckschicht aus der wässrigen Lösung und einer organischen Lösung, die eine polyfunktionale Säurehalogenidkomponente enthält, um eine Grenzflächenpolymerisation der polyfunktionalen Aminkomponente und der polyfunktionalen Säurehalogenidkomponente zu bewirken, worin ein Membranwaschbehandlungsschritt zum Entfernen einer nichtumgesetzten polyfunktionalen Aminkomponente nach der Hautschichtbildung vermieden wird.

2. Verfahren zum Herstellen der semipermeablen Verbundmembran nach Anspruch 1, worin der Gehalt der nichtumgesetzten polyfunktionalen Aminkomponente in der semipermeablen Verbundmembran 200 mg/m$^2$ oder weniger ist.

3. Verfahren zum Herstellen der semipermeablen Verbundmembran nach Anspruch 1, worin die Viskosität der wässrigen Aminlösung 7 mPa·s oder höher ist.

4. Verfahren zum Herstellen der semipermeablen Verbundmembran nach Anspruch 1, worin die Aminlösung eine Bewegungsgeschwindigkeit von 0,3 mg/m$^2$ sec oder weniger in dem porösen Träger der polyfunktionalen Aminkomponente bei Kontakt mit dem porösen Träger bei einem herkömmlichen Druck.

5. Verfahren zum Herstellen der semipermeablen Verbundmembran nach Anspruch 1, umfassend den Schritt des Anwendens einer wässrigen Aminlösung, so dass die Menge der polyfunktionalen Aminkomponente, die auf dem porösen Träger breitgestellt wird, 200 bis 600 mg/m$^2$ ist.

**Revendications**

1. Processus de production d'une membrane composite semi-perméable ayant une couche superficielle, formée sur une surface d'un support poreux, comportant une résine polyamide obtenue par polymérisation inter-faciale d'un composant d'amine polyfonctionnel et d'un composant d'halogénure d'acide polyfonctionnel, le processus comprenant les étapes qui consistent: à former une couche de couverture d'une solution aqueuse qui comprend une solution amine aqueuse comportant un composant amine polyfonctionnel et un polyalcool sur un support poreux ; et à former une couche superficielle qui comporte une résine polyamide en mettant en contact la couche de couverture de la solution aqueuse et une solution organique qui contient un composant d'halogénure polyfonctionnel pour provoquer une polymérisation inter-faciale du composant amine polyfonctionnel et du composant d'halogénure polyfonctionnel, où une étape de traitement de lavage de membrane destinée à retirer un composant amine polyfonctionnel n'ayant pas réagi après omission de la formation de la couche superficielle.

2. Processus de production de la membrane composite semi-perméable selon la revendication 1, dans lequel la teneur du composant amine polyfonctionnel n'ayant pas réagi dans la membrane semi-perméable composite est de 200 mg/m$^2$ ou moins.

3. Processus de production de la membrane composite semi-perméable selon la revendication 1, dans lequel la viscosité de la solution amine aqueuse est de 7 mPas ou plus.

4. Processus de production de la membrane composite semi-perméable selon la revendication 1, dans lequel la solution amine a une vitesse de déplacement de 0,3 mg/m$^2$ sec. ou moins dans le support poreux du composant amine polyfonctionnel en contact avec le support poreux à une pression ordinaire.

5. Processus de production de la membrane composite semi-perméable selon la revendication 1, comprenant l'étape qui consiste à appliquer une solution amine aqueuse de sorte que la quantité du composant amine polyfonctionnel alimenté sur le support poreux soit de 200 à 600 mg/m$^2$.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 55147106 A
- JP 62121603 A
- JP 63218208 A
- JP 2187135 A
- JP 61042308 A
- JP 20024470 B
- JP 2002516743 PCT
- JP 11319517 A
- JP 3525759 B
- US 6015495 A
- JP 58024303 A
- JP 1180208 A
- JP 8224452 A